(19) Europäisches Patentamt
European Patent Office
Office européen des brevets

(11) **EP 2 978 582 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **14713763.2**

(22) Anmeldetag: **25.03.2014**

(51) Int Cl.:
*B29C 47/68* (2006.01) *B29C 47/92* (2006.01)
*B29C 47/08* (2006.01) *B29C 47/36* (2006.01)

(86) Internationale Anmeldenummer:
**PCT/EP2014/000806**

(87) Internationale Veröffentlichungsnummer:
**WO 2014/154354 (02.10.2014 Gazette 2014/40)**

(54) **VERFAHREN ZUR STEUERUNG EINER SCHMELZEVERARBEITENDEN ANLAGE**

METHOD FOR CONTROLLING A MELT-PROCESSING INSTALLATION

PROCÉDÉ DE CONDUITE D'UNE INSTALLATION DE TRANSFORMATION DE MATIÈRE EN FUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2013 DE 102013005199**

(43) Veröffentlichungstag der Anmeldung:
**03.02.2016 Patentblatt 2016/05**

(73) Patentinhaber: **Maag Automatik GmbH**
**63762 Großostheim (DE)**

(72) Erfinder:
• **LEBERT, Christian**
**63840 Hausen (DE)**
• **POHL, Harald**
**48477 Hörstel (DE)**

(74) Vertreter: **Spranger, Stephan**
**Spranger + Burger**
**Patentanwälte**
**Widenmayerstrasse 28**
**80538 München (DE)**

(56) Entgegenhaltungen:
EP-A- 1 208 956          DE-A1- 10 301 536
DE-A1-102006 019 445     JP-A- H08 309 831
US-A- 5 122 315          US-A1- 2003 132 146

## Beschreibung

Die Erfindung betrifft ein Verfahren zur Steuerung einer schmelzeverarbeitenden Anlage gemäß dem Oberbegriff des Anspruchs 1.

Schmelzeverarbeitende Anlagen gemäß dem Oberbegriff des Anspruchs 1 mit einer Schmelzezufuhrvorrichtung, einer Filtervorrichtung und einer schmelzeverarbeitenden Vorrichtung sowie gegebenenfalls zusätzlich dazu mit einer Schmelzepumpe, werden beispielsweise für die Verarbeitung von Kunststoffschmelzen eingesetzt. Solche Kunststoffschmelzen können beispielsweise polymere Kunststoffschmelzen sein. Die Schmelzen werden dabei beispielsweise in Extrusionslinien verarbeitet, wobei als Schmelzezufuhrvorrichtung ein Extruder oder eine Schmelzepumpe zum Einsatz kommen können, durch welche die Schmelze kontinuierlich durch solche üblicherweise volumetrisch fördernde Aggregate gefördert wird. Schmelzepumpen können beispielsweise · als Zahnradpumpen ausgeführt sein und als schmelzeverarbeitende Vorrichtung kann in einem kontinuierlichen Extrusionsprozess beispielsweise eine Folien, Rohre, Profile, Flachprofile, Platten oder dergleichen extrudierende bzw. formende Vorrichtung zum Einsatz kommen.

Da insbesondere bei der Verarbeitung von Kunststoffen, zum Beispiel auch bei entsprechender Beimischung von Kunststoff-Recycling-Material, die zu verarbeitenden Schmelzen verschmutzt sein können und/oder an die zu verarbeitenden Schmelzematerialien besonders hohe Reinheitsanforderungen gestellt werden, ist eine Filtervorrichtung vorgesehen, welche dort die entsprechenden Verschmutzungen vor der schmelzeverarbeitenden Vorrichtung heraus filtert. Üblicherweise können solche Filtervorrichtungen einen teilweise nicht linearen Druckabfall zur Folge haben, was den von der Schmelzezufuhrvorrichtung/Extruder bzw. der Schmelzepumpe/Zahnradpumpe geförderten Schmelzemasse einen entsprechenden unerwünschten und gegebenenfalls auszugleichenden Druckabfall aufprägt.

Vorrichtungen zum Filtrieren eines Fluids können beispielsweise als Siebwechsler ausgebildet sein. Mit solchen Vorrichtungen werden zum Beispiel die Fremdpartikel aus dem zu filtrierenden Fluid, beispielsweise aus aufgeschmolzenem Kunststoff in Form seiner polymeren Schmelze ausgefiltert. Entsprechende Verschmutzungen können beispielsweise bei dem erwähnten aufgeschmolzenem Recyclingmaterial verstärkt auftreten. Im Rahmen der Filtrierung setzt sich selbstverständlich der entsprechende Filter bzw. das entsprechende Siebnest mit Rückständen früher oder später zu, so dass eine Reinigung erfolgen muss. Idealerweise können dazu zwei Filtersysteme parallel zueinander angeordnet sein, so dass es möglich ist, ein Filtersystem im Betrieb weiterlaufen zu lassen, während das andere einer Reinigung unterzogen wird. Eine Reinigung kann dabei beispielsweise durch sogenanntes Rückspülen mit bereits gefiltertem Fluid entgegen der üblichen Produktionsströmungsrichtung des Fluids erfolgen. Dazu sind Vorrichtungen bekannt, welche in der Fachsprache als sogenannte Rückspülsiebwechsler bezeichnet werden. Erst nach einer gewissen Anzahl an automatischen Rückspülvorgängen muß dann gegebenenfalls ein manueller Service mit Siebwechsel stattfinden.

Insbesondere bei Einsetzen solcher Filtervorrichtungen in Anwendungen, welche hinsichtlich des Masseflusses des Fluids sehr kritisch sind, beispielsweise bei der Herstellung von Kunststofffolien mit geringer Dicke, ist es also wünschenswert, eine kontinuierliche Strömung von gefiltertem Fluid ohne besondere Schwankungen pro Zeiteinheit sicherstellen zu können, auch wenn ein Filter gereinigt oder gewechselt werden muss.

Die europäische Patentschrift EP 1 778 379 B1 beschreibt eine Vorrichtung und ein Verfahren zum Filtrieren eines Fluids, insbesondere für kunststoffverarbeitende Anlagen, welche(s) ebenfalls einen konstanten Volumenstrom auch im Falle eines Rückspülens aufrechterhalten soll. Dabei kommt nach einem dortigen Filternest in einem Schmelzekanal ein zusätzlicher Verdrängerbolzen zum Einsatz, welcher in geeigneter Position des Filternests gereinigte Schmelze in entgegen der Produktionsrichtung zeigender Richtung im Rückspülverfahren durch den entsprechend positionierten Filter dort drücken kann. Auch kann dort durch die mehrteilige Ausführung und die Aufteilung der Funktion auf verschiedene Bolzen, welche den eigentlichen Filter tragen und den Verdrängerbolzen, eine im Wesentlichen kontinuierliche Schmelzeströmung auch im Fall einer Reinigung aufrechterhalten werden.

Insbesondere bei Schmelzematerialien mit größeren Verschmutzungsanteilen, zum Beispiel bei Kunststoff-Recycling-Materialien, kommt es also zum Einsatz von kontinuierlich arbeitenden sogenannten Rückspül-Siebwechslern. Dabei wird, wie erwähnt, in dem selbstreinigenden Rückspülmodus die im Filter bzw. der entsprechenden Siebkavität zurückgehaltene Verschmutzung mit einem in Gegenstromrichtung beaufschlagten Schmelzestrom entfernt und aus der Filtervorrichtung abgeführt. Dabei kann es allerdings nachteilig sein, dass bei Betrieb eines solchen Rückspül-Siebwechslers zu viel Material aus dem Schmelzestrom entnommen wird, wodurch der normale Produktionsbetrieb gestört werden kann.

Da es allerdings beim Rückspülen bzw. bei einem eventuellen Siebaustausch von Filtervorrichtungen nötig ist, entsprechend Material aus dem Produktionsprozess zu entnehmen, führt diese Entnahme von Schmelzevolumen aus dem Produktionsablauf zu Problemen hinsichtlich der kontinuierlichen Versorgung der schmelzeverarbeitenden Vorrichtung mit Schmelzematerial. Insbesondere zum Beispiel bei der Herstellung von Flachfolien ist es erforderlich, die Nachfuhr von Schmelzematerial innerhalb eines Volumenprozents vom benötigten Produktionsschmelzestrom konstant zu halten, um Schwankungen in einer Foliendicke oder Fehler im Folienmaterial zuverlässig zu vermeiden zu können.

Aus der deutschen Offenlegungsschrift DE 10 2006 019 445 A1 der Rechtsvorgängerin der Patentanmelderin ist bereits ein Verfahren zur Steuerung einer kunststoffverarbeitenden Anlage und eine entsprechende kunststoffverarbeitende Anlage bekannt, wobei bei einer Volumenänderung der polymeren Schmelze zwischen der Schmelzezufuhrvorrichtung und der schmelzeverarbeitenden Vorrichtung dort eine zusätzliche Volumensteuerung oder Volumenregelung aktiviert wird, welche eine Schmelzefördervorrichtung so beeinflusst, dass dadurch eine Volumenänderung ausgeglichen wird. Dabei wird der Schmelzedruck als Regelgröße für eine druckkonstante Steuerung des Volumenstroms der Schmelze gemäß dem dortigen Verfahren in der dortigen Vorrichtung eingesetzt.

Die deutsche Offenlegungsschrift DE 10 2006 040 703 A1 beschreibt eine Filtervorrichtung, bei welcher der durch Materialentnahme aus dem Prozess dort entstehende Druckabfall bzw. Volumenschwund sensitiv ausgeglichen werden soll, indem am Ausfuhrkanal des dortigen Siebwechslers eine Druckkonstanz und Volumenkonstanz erzielt werden soll durch Steuerung des Füllungsgrads einer dortigen Zufuhreinrichtung und durch Steuerung eines dortigen Druckerzeugers.

Die deutsche Offenlegungsschrift DE 103 01 536 A1 beschreibt ein Verfahren und eine Vorrichtung zum Filtrieren einer Kunststoffschmelze, bei welcher Grenzwerte für Durchflussmengen von Teilströmen der dortigen Kunststoffschmelzeströme als Istwert bestimmt werden und mit maximalen Grenzwerten verglichen werden, um eine Einstellung der Teilströme ausführen zu können.

Das US-Patent US 5,122,315 beschreibt ein Verfahren und eine Vorrichtung zum Überwachen und Kontrollieren der Ausstoßleistung eines thermoplastischen Extruders.

Es ist die Aufgabe der vorliegenden Erfindung, ein Verfahren zur Steuerung einer schmelzeverarbeitenden Anlage, insbesondere zur Verarbeitung einer Kunststoffschmelze, vorzusehen, welches möglichst einfach, zuverlässig und effektiv eine Reinigung bzw. einen Austausch von Filterelementen einer Filtervorrichtung davon ermöglicht, ohne den Materialfluss der Schmelze durch die schmelzeverarbeitende Anlage zu unterbrechen, wobei insbesondere der zuverlässige und konstante bzw. weitestgehend konstante Schmelzefluss zur schmelzeverarbeitenden Vorrichtung unter allen Betriebsbedingungen sichergestellt werden soll.

Erfindungsgemäß soll die oben beschriebene Störung eines konstanten Schmelzevolumenstroms vermieden werden. Insbesondere soll erfindungsgemäß dabei auch ein Rückspülen der Schmelze möglich sein, so dass ohne Störungen und Volumenverluste im Hauptstrom während des Rückspülens weiter gearbeitet werden kann. Dabei soll der sich ergebende, beschriebene Zustand bei Volumenentnahme aus der Schmelze möglichst kurz gehalten werden.

Diese Aufgabe wird erfindungsgemäß gelöst durch ein Verfahren zur Steuerung einer schmelzeverarbeitenden Anlage nach der Lehre mit den Merkmalen gemäß Anspruch 1. Erfindungsgemäß vorteilhafte Ausführungsformen des Verfahrens sind in den jeweiligen Unteransprüchen definiert.

Das erfindungsgemäße Verfahren dient zur Steuerung einer schmelzeverarbeitenden Anlage, wobei die Anlage eine Schmelzezufuhrvorrichtung, eine Filtervorrichtung und eine schmelzeverarbeitende Vorrichtung aufweist, oder zusätzlich dazu eine Schmelzepumpe aufweist. Erfindungsgemäß wird eine maximal erzielbare Volumenänderungsrate der Volumenzufuhr je Zeiteinheit der Schmelzezufuhrvorrichtung und/oder der Schmelzepumpe bestimmt, wobei die Volumenänderungsrate definiert ist als die Änderung der Volumenzufuhr je Zeiteinheit pro Zeiteinheit. Dann wird ein maximaler Volumenabweichungswert der Volumenzufuhr je Zeiteinheit zur schmelzeverarbeitenden Vorrichtung festgelegt, und eine Volumenänderung zwischen Schmelzezufuhrvorrichtung und/oder Schmelzepumpe und schmelzeverarbeitender Vorrichtung in der Filtervorrichtung wird so eingestellt, dass eine sich aus dieser Volumenänderung pro Zeiteinheit ergebende Volumenänderungsrate der Filtervorrichtung kleiner oder gleich oder so geringfügig größer als die maximal erzielbare Volumenänderungsrate der Schmelzezufuhrvorrichtung und/oder der Schmelzepumpe ist, so dass der maximale Volumenabweichungswert an der schmelzeverarbeitenden Vorrichtung nicht überschritten bzw. nicht unterschritten wird.

Erfindungsgemäß wird also gegenüber dem bekannten Stand der Technik ein komplett neuer und anderer Weg beschritten. Es wird nicht auf die Druckkonstanz im Verfahrensablauf primär abgestellt, sondern es werden konkret die Durchsätze der Schmelze von der Schmelzezufuhrvorrichtung über die Filtervorrichtung zur schmelzeverarbeitenden Vorrichtung als relevante Bestimmungsgrößen zum zuverlässigen Betrieb der Vorrichtung im Sinne des erfindungsgemäßen Verfahrens herangezogen.

So gibt die Volumenänderungsrate der Volumenzufuhr je Zeiteinheit der Schmelzezufuhrvorrichtung und/oder Schmelzepumpe ein Maß dafür, wie der Schmelzedurchsatz (Volumen pro Zeiteinheit) über die Zeit durch entsprechende Ansteuerung der Schmelzezufuhrvorrichtung und/oder der Schmelzepumpe erhöht bzw. erniedrigt werden kann. Das heißt, diese erfindungsgemäße Kenngröße der maximal erzielbaren Volumenänderungsrate der Volumenzufuhr je Zeiteinheit ist ein Maß dafür, wie viel Schmelzevolumen pro Zeit in einer bestimmten Zeiteinheit zusätzlich oder weniger förderbar ist. Die entsprechende Förderleistung wird also auf der Schmelzezufuhrseite erfindungsgemäß angepasst. Kriterium ist dabei ferner, dass der maximale Volumenabweichungswert der Schmelze, welche der schmelzeverarbeitenden Vorrichtung als Volumen pro Zeiteinheit (Durchsatz) zugeführt wird, im Rahmen der maximal zulässigen Volumenabweichung dort liegen muss. Das heißt, der Durchsatz (Volumen pro Zeiteinheit) an Schmelze, welche der schmelzeverarbeitenden Vorrichtung zugeführt wird, darf nur innerhalb der Grenzen des maximalen Volumenabweichungswerts veränderbar sein. Nur so ist sichergestellt, dass erfindungsgemäß der Herstellungsprozess auch bei Volumenschwankungen vor der schmelzeverarbeitenden Vorrichtung in der schmelzeverarbeitenden Vorrichtung kontinuierlich und konstant ablaufen kann.

Auch wird im Fall eines im Bereich der Filtervorrichtung zu entnehmenden Zusatzvolumens (sei es für einen Rückspülvorgang oder im Fall von Servicearbeiten, z.B. bei einem Siebwechsel, für eine Neubefüllung einer entsprechenden Siebkavität), dort Schmelze vom Schmelzedurchsatz, welcher von der Schmelzezufuhrvorrichtung und/oder von der Schmelzepumpe zugeführt wird, abgezweigt und nicht zur schmelzeverarbeitenden Vorrichtung weitergeführt. Dabei ist das erfindungsgemäße Kriterium einzuhalten, dass die Volumenänderung zwischen der Schmelzezufuhrvorrichtung und/oder der Schmelzepumpe und der schmelzeverarbeitenden Vorrichtung in der Filtervorrichtung so eingestellt wird, dass eine sich aus dieser Volumenänderung pro Zeiteinheit ergebende Volumenänderungsrate der Filtervorrichtung ergibt, welche bevorzugt kleiner oder gleich oder so gering größer ist als die maximal erzielbare Volumenänderungsrate der Schmelzezufuhrvorrichtung und/oder der Schmelzepumpe. Das heißt, das im Bereich der Filtervorrichtung dem Produktionsstrom entnommene Volumen pro Zeiteinheit darf sich über die Zeit nur so rasch ändern, dass die sich ergebende entsprechende Durchsatzänderung im Bereich der Filtervorrichtung durch die entsprechende Durchsatzänderung über die Zeit im Bereich der Schmelzezufuhrvorrichtung und/oder der Schmelzepumpe erfindungsgemäß so ausgeglichen werden kann, dass es nachfolgend im Bereich der schmelzeverarbeitenden Vorrichtung zu keiner Durchsatzänderung kommt, welche den Herstellungsprozess negativ beeinflusst, das heißt die dortige Durchsatzänderung liegt erfindungsgemäß als Kriterium dabei immer innerhalb des maximalen Volumenabweichungswerts, wie er definiert ist.

Erfindungsgemäß kann die Festlegung bzw. Bestimmung der maximal erzielbaren Volumenänderungsrate der Volumenzufuhr je Zeiteinheit der Schmelzezufuhrvorrichtung und/oder der Schmelzepumpe entweder im Vorfeld bestimmt werden und dann als bekannt festgesetzt sein, oder im Produktionsprozess durch entsprechende Sensorik online bestimmt werden. Auch die zulässige Volumenänderungsrate der Filtervorrichtung kann dann entsprechend der vorgegebenen maximal erzielbaren Volumenänderungsrate bestimmt und daran angepasst werden. Auch die als Kriterium wesentliche Größe des maximalen Volumenabweichungswerts, das heißt die maximal zulässige Durchsatzschwankung zur schmelzeverarbeitenden Vorrichtung kann entweder bereits im Vorfeld bei Auslegung einer schmelzeverarbeitenden Anlage festgelegt werden oder durch entsprechende Sensorik während des Betriebs der Anlage bestimmt und als Regel-/Steuergröße erfasst werden.

Zweckmäßig wird beim erfindungsgemäßen Verfahren außerdem bevorzugt ein Wert eines Produktionsparameters mittels einer Messvorrichtung ermittelt, wobei der Wert des Produktionsparameters einer Einrichtung zum Einstellen der Volumenzufuhr aus der Schmelzezufuhrvorrichtung und/oder der Schmelzepumpe und/oder zum Einstellen der Volumenänderung in der Filtervorrichtung zugeführt wird, so dass der maximale Volumenabweichungswert nicht überschritten wird.

Zur Steuerung des erfindungsgemäßen Verfahrens kann also die Einrichtung zum Einstellen der Volumenzufuhr dienen, welche die Einstellung der entsprechenden Durchsatzmenge bevorzugt in Abhängigkeit der Bestimmung eines Produktionsparameters mittels einer geeigneten Messvorrichtung ermittelt. Bevorzugt kann es sich bei einer solchen Messvorrichtung um die Messung des Produktionsparameters der Dicke d einer entsprechend extrudierten Folie handeln, im Fall, dass die schmelzeverarbeitende Vorrichtung beispielsweise eine Extrusionsvorrichtung zur Erzeugung einer Kunststofffolienbahn aus entsprechendem Schmelzematerial ist. Erfindungsgemäß bevorzugt kann die Messvorrichtung also eine Dickenmessvorrichtung sein, mittels welcher eine Dicke d (d.h. dabei: eine Foliendicke) einer in der schmelzeverarbeitenden Vorrichtung produzierten Folienbahn ermittelt wird. Auch die entsprechende Messung des Produktionsparameters des Drucks, mit welchem die Schmelze der schmelzeverarbeitenden Vorrichtung zugeführt wird, kann zur erfindungsgemäßen Steuerung verwendet werden

Erfindungsgemäß bevorzugt ist die Einrichtung zum Einstellen der Volumenzufuhr aus der Schmelzezufuhrvorrichtung und/oder der Schmelzepumpe und/oder zum Einstellen der Volumenänderung in der Filtervorrichtung eine Regelungsungseinrichtung, welche als Grundlage der Regelung zumindest den Wert des Produktionsparameters verwendet, so dass der maximale Volumenabweichungswert nicht überschritten wird .

Eine solche Regelung ermöglicht eine Online-Regelung der relevanten Verfahrensschritte, sodass das erzeugte Verfahrensprodukt immer im Rahmen der einzuhaltenden Herstellungstoleranzen herstellbar ist. Dazu kann insbesondere der Wert des Produktionsparameters, wie beispielsweise die Dicke d einer herzustellenden Kunststofffolienbahn, als Grundlage für die Regelung herangezogen werden. Sobald es im Bereich der Dickenmessung zu Abweichungen kommt, kann dann entsprechend durch Korrektur der Durchsätze gemäß den oben geschilderten erfindungsgemäßen Verfahrensschritten eine regelnde Anpassung der Produktionsparameter, insbesondere der einzustellenden Durchsätze des Schmelzestroms vorgenommen werden.

Gemäß einer anderen bevorzugten Ausführungsform des erfindungsgemäßen Verfahrens ist die Einrichtung zum Einstellen der Volumenzufuhr aus der Schmelzezufuhrvorrichtung und/oder der Schmelzepumpe und/oder zum Einstellen der Volumenänderung in der Filtervorrichtung eine Steuerungseinrichtung. Das Einstellen der Volumenzufuhr aus der Schmelzezufuhrvorrichtung und/oder der Schmelzepumpe kann im Sinne einer Steuerung erfolgen, bei welcher zumindest der Wert des Produktionsparameters verwendet wird, sodass der maximale Volumenabweichungswert nicht überschritten wird. Eine solche Steuerung ist relativ einfach zu realisieren und basiert auf den vorbestimmten Anlagenparametern, welche bei Auslegung der Anlage festgelegt sind.

Bevorzugt wird beim erfindungsgemäßen Verfahren der Wert der Volumenänderung zwischen Schmelzezufuhrvorrichtung und/oder Schmelzepumpe und schmelzeverarbeitender Vorrichtung in der Filtervorrichtung kontinuierlich eingestellt.

Der Wert der Volumenänderung zwischen Schmelzezufuhrvorrichtung und/oder Schmelzepumpe und schmelzeverarbeitender Vorrichtung in der Filtervorrichtung kann gemäß einer weiteren bevorzugten Ausführungsform des erfindungsgemäßen Verfahrens auch schrittweise eingestellt werden.

Zweckmäßig kann gemäß dem erfindungsgemäßen Verfahren ein Maximalwert der Volumenzufuhr je Zeiteinheit der Schmelzezufuhrvorrichtung und/oder der Schmelzepumpe bestimmt werden und die maximal erzielbare Volumenänderungsrate der Schmelzezufuhrvorrichtung und/oder der Schmelzepumpe liegt nur so lange vor, bis der Maximalwert der Volumenzufuhr erreicht wird. Oder die maximal erzielbare Volumenänderungsrate der Schmelzezufuhrvorrichtung und/oder der Schmelzepumpe liegt nur so lange vor, wie der Wert der Volumenzufuhr vom Maximalwert der Volumenzufuhr zum bestimmten Produktionssollwert zurückgefahren wird.

Der Maximalwert der Volumenzufuhr je Zeiteinheit der Schmelzezufuhrvorrichtung und/oder der Schmelzepumpe gibt an, wie hoch der maximal mögliche Wert des Durchsatzes der Anlage sein kann. Entsprechend ergibt sich daraus auch eine natürliche Obergrenze, bis zu der eine Volumenentnahme im Bereich der Filtervorrichtung überhaupt möglich ist. Sollte die Fähigkeit der Durchsatzsteigerung der Schmelzezufuhrvorrichtung und/oder der Schmelzepumpe nämlich bis zu ihrem Maximalwert ausgeschöpft sein, kann eine weitere Volumenentnahme im Bereich der Filtereinrichtung nicht mehr kompensiert werden, sodass die Bedingung der minimalen Volumenabweichung des Durchsatzes zur schmelzeverarbeitenden Vorrichtung nicht mehr erfüllt werden könnte. Durch die Festlegung des entsprechenden Maximalwerts vor Inbetriebnahme der Anlage oder online während des Anlagenbetriebs ist somit ein besonders sicherer Betrieb der Anlage innerhalb der geforderten Produktionstoleranzen leicht möglich.

Bevorzugt liegt der maximale Volumenabweichungswert in einem Bereich von 0,0 bis 1,0 % der Volumenzufuhr je Zeiteinheit zur schmelzeverarbeitenden Vorrichtung. Mit einem Wert der Abweichung im Bereich von 0,0 bis 1% kann ein besonders zuverlässiger Betrieb der Anlage sichergestellt werden.

Erfindungsgemäß kann also immer der entnommene Durchsatz im Bereich der Filtervorrichtung eingestellt werden, wobei entsprechend der Durchsatz, welcher seitens der Schmelzezufuhrvorrichtung und/oder der Schmelzepumpe zugeführt wird, im Rahmen des entnommenen Durchsatzes nachgeführt wird. Die Möglichkeit der Abstimmung der Durchsatzänderung bzw. der maximalen Durchsatzänderung der Schmelzezufuhrvorrichtung und/oder der Schmelzepumpe und der Durchsatzänderung im Bereich der Filtervorrichtung wird also erfindungsgemäß dazu verwendet, im Bereich der Filtervorrichtung nicht nur über die Zeit langsam Schmelzematerial zu entnehmen, sondern es wird vielmehr dort die Entnahme des Schmelzematerials so beschleunigt bzw. der entnommene Durchsatz so hochgefahren, dass zeitlich eine schnellere Entnahme von Schmelzematerial aus dem Volumenstrom der Produktion ermöglicht ist, soweit wie ein Nachführen von zusätzlichem Schmelzematerial durch Erhöhung des entsprechenden Durchsatzes seitens der Schmelzezufuhrvorrichtung und/oder der Schmelzepumpe möglich sein kann, ohne dass der maximale Volumenabweichungswert im Bereich der Schmelzezuführung zur schmelzeverarbeitenden Vorrichtung erfindungsgemäß über- bzw. unterschritten wird.

In der beschriebenen Weise ist somit auf konstruktiv einfache Weise ein kontinuierlicher Produktionsbetrieb ohne größere Masseschwankungen im Produktionsstrom der gefilterten Schmelze möglich, wobei gleichzeitig die entsprechende Rückspülreinigung oder Servicearbeiten einzelner Filterelemente erfolgen kann.

Die Erfindung wird im Folgenden rein beispielhaft und nicht auf die gezeigten Ausführungsformen beschränkend näher erläutert werden. In den Figuren zeigt:

Fig. 1     eine schematische Ansicht einer schmelzeverarbeitenden Anlage, bei welcher ein Verfahren zur Steuerung einer solchen Anlage gemäß der vorliegenden Erfindung zum Einsatz kommen kann,

Fig. 2     eine graphische Darstellung der Durchsätze und Volumenänderungsraten gemäß einer Ausführungsform des erfindungsgemäßen Verfahrens; und

Fig. 3     eine Darstellung von Volumenänderungsraten bzw. Durchsätzen beim Betrieb einer schmelzeverarbeitenden Anlage gemäß dem Stand der Technik.

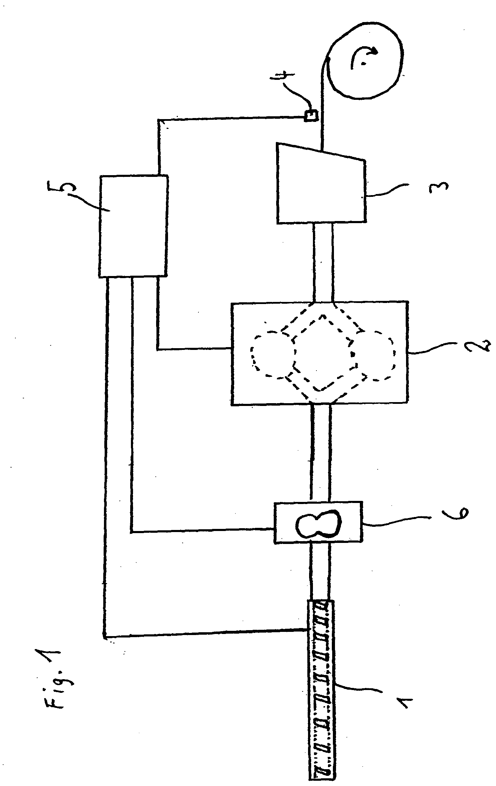

Figur 1 zeigt eine schmelzeverarbeitende Anlage in schematischer Darstellung. Mit dieser Anlage kann das erfindungsgemäße Verfahren durchgeführt werden. Die erfindungsgemäße Anlage weist eine Schmelzezufuhrvorrichtung 1 auf, eine Filtervorrichtung 2 und eine schmelzeverarbeitende Vorrichtung 3. Zusätzlich ist in der Darstellung gemäß Figur 1 eine Schmelzepumpe 6 dargestellt. Generell kann zur Durchführung des erfindungsgemäßen Verfahrens eine entsprechende Anlage auch gegebenenfalls ohne die Schmelzepumpe 6 betrieben werden. Als Schmelzezufuhrvorrichtung 1 kann beispielsweise ein Einschneckenextruder oder ein Doppelschneckenextruder dienen. Als Doppelschneckenextruder kann beispielsweise ein Doppelschneckenextruder mit gegenläufiger Doppelschnecke zum Einsatz kommen. Bei einem solchen Extruder mit gegenläufiger Doppelschnecke ist insbesondere gewährleistet, dass dieser ausreichend Schmelzematerial mit einem relativ hohen Schmelzedruck zur Verfügung stellen kann. In diesem Fall ist insbesondere der Einsatz einer Schmelzepumpe 6 gegebenenfalls entbehrlich. Beim Einsatz eines Doppelschneckenextruders mit gleichläufiger Doppelschnecke ist hingegen zu berücksichtigen, dass dabei üblicherweise die erzielbaren Druckniveaus nicht zum Betrieb einer schmelzeverarbeitenden Anlage ausreichen können, sodass zur Druckerzeugung zusätzlich eine Schmelzepumpe 6 zum Einsatz kommen sollte.

Die Schmelzepumpe 6 kann beispielsweise eine bekannte Zahnradpumpe sein.

Als Filtervorrichtung 2 kann insbesondere beispielsweise ein Rückspülsiebwechsler der allgemein bekannten Art Verwendung finden, wie er beispielsweise unter der Bezeichnung BFX der Anmelderin bekannt ist, bei welchem in zwei oder mehreren Siebkavitäten ein Rückspülen des Schmelzematerials zur Reinigung der dortigen Siebe Verwendung finden kann. Dazu wird, wie erläutert, ein Zusatzschmelzevolumen benötigt, welches aus dem Produktionsfluss der Schmelze durch die Filtervorrichtung dort entnehmbar sein kann. Die entsprechende Volumenentnahme und deren Gegenkompensation ist Gegenstand der vorliegenden Erfindung.

Als schmelzeverarbeitende Vorrichtung 3 kann beispielsweise eine Breitschlitzdüse Verwendung finden, welche eine Folienbahn aus Schmelzematerial, bevorzugt beispielsweise aus Kunststoffschmelzematerial, in Breiten von beispielsweise 60 bis 140 cm erzeugen kann.

Figur 1 zeigt ferner eine Messvorrichtung 4, bevorzugt eine Dickenmessvorrichtung, welche eine Dicke d einer Folienbahn misst, wie sie mit einer als Schlitzdüse ausgeführten schmelzeverarbeitenden Vorrichtung 3 beispielhaft erzeugt werden kann. Eine solche Dickenmessvorrichtung ist prinzipiell eigentlich bekannt. Die Folienbahn gemäß Figur 1 wird am Ende des schmelzeverarbeitenden Vorgangs, wie rechts in Figur 1 dargestellt, zu einer Rolle aufgewickelt.

In Figur 1 ist außerdem eine Einrichtung 5 zum Einstellen der Volumenzufuhr aus der Schmelzezufuhrvorrichtung und/oder der Schmelzepumpe und/oder zum Einstellen der Volumenänderung in der Filtervorrichtung 2 gezeigt. Bevorzugt handelt es sich bei der Einrichtung 5 dabei um eine Regeleinrichtung, welche beispielsweise auf Grundlage der Dicke d der Folienbahn, bestimmt durch die Messvorrichtung 4, die entsprechenden Durchsätze erfindungsgemäß regeln kann.

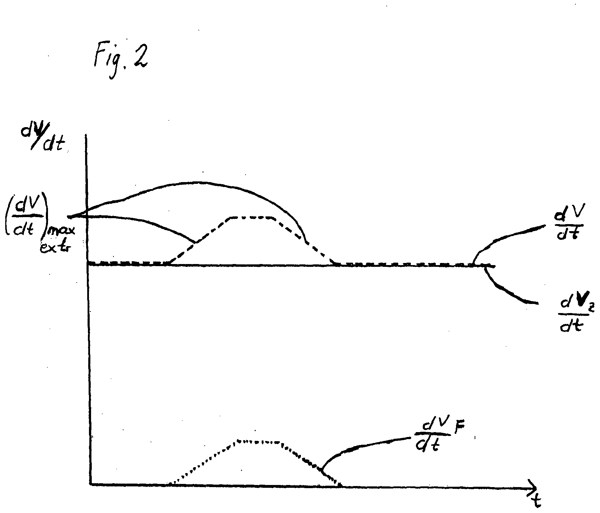

Figur 2 zeigt einen Verlauf der Volumenänderungsraten bzw. der Durchsätze einer schmelzeverarbeitenden Anlage gemäß einer bevorzugten Ausführungsform des erfindungsgemäßen Verfahrens.

Erfindungsgemäß wird online oder vor Inbetriebnahme der schmelzeverarbeitenden Anlage eine maximal erzielbare Volumenänderungsrate der Volumenzufuhr je Zeiteinheit der Schmelzezufuhrvorrichtung 1 und/oder der Schmelzepumpe 6 bestimmt, d.h. es wird bestimmt, wie sich der Durchsatz des Volumenstroms je Zeiteinheit im schnellsten Fall ändern kann. Dies wird dargestellt durch die Steigungen der entsprechenden Linien des Volumenänderungsverlaufs in Figur 2.

Ebenfalls bestimmt wird der Maximalwert der Volumenzufuhr je Zeiteinheit (des Durchsatzes) der Schmelzezufuhrvorrichtung 1 und/oder der Schmelzepumpe 6, wobei somit bestimmt wird, inwieweit der Volumendurchsatz der Schmelzezufuhr von dort maximal erhöht werden kann. Wie aus der Darstellung der Figur 2 zu sehen ist, wird in der Filtervorrichtung 2 eine Volumenänderung zwischen der Schmelzezufuhrvorrichtung 1 und/oder der Schmelzepumpe 6 und der schmelzeverarbeitenden Vorrichtung 3 so eingestellt, dass die sich aus dieser Volumenänderung pro Zeiteinheit ergebende Volumenänderungsrate in der Filtervorrichtung 2 kleiner oder gleich oder geringfügig größer ist als die maximal erzielbare Volumenänderungsrate der Schmelzezufuhrvorrichtung 1 und/oder der Schmelzepumpe 6. Im dargestellten Fall ist ein Beispiel gezeigt, in welchem die Volumenänderung in der Schmelzevorrichtung 2 der maximal schnellstmöglich erzielbaren Volumenänderung der Schmelzezufuhrvorrichtung 1 und/oder der Schmelzepumpe 6 entspricht. Dabei gleichen sich die beiden Schmelzevolumenänderungen jeweils so aus, dass erfindungsgemäß der maximale Volumenabweichungswert der Volumenzufuhr je Zeiteinheit zur schmelzeverarbeitenden Vorrichtung 3 nicht über- bzw. unterschritten wird. Dieser maximale Volumenabweichungswert ist in Figur 2 nicht dargestellt, ergibt sich aus der Darstellung der Figur 2 aber daraus, dass der dargestellte Verlauf der Volumenzufuhr je Zeiteinheit zur schmelzeverarbeitenden Vorrichtung 3 als Gerade ohne Abweichungen verläuft, auch in dem Zeitbereich, in welchem das Volumen im Bereich der Filtervorrichtung 2 vom Schmelzestrom zur schmelzeverarbeitenden Vorrichtung 3 abgezweigt wird (Fläche unter der Kurve der Darstellung der Volumenänderung der Filtervorrichtung 2 ist gleich die Fläche unter der Linie der Volumenänderung der Schmelzezufuhr 1 und/oder der Schmelzepumpe 6 in Figur 2).

In einer Formel lässt sich das erfindungsgemäße Verfahren also folgendermaßen darstellen:

$$dV_F/dt \leq (dV/dt)\text{max extr.}$$

oder

$$dV_F/dt \geq (dV/dt)\text{max extr.}$$

wobei zusätzlich immer gelten muss: $dV_z/dt <$ maximaler Volumenabweichungswert, z.B. $\pm$ 1,0% des Sollwerts der Volumenzufuhr je Zeiteinheit zur schmelzeverarbeitenden Vorrichtung 3

Dabei ist:

$$dV_F/dt = \text{Volumenänderung in der Filtervorrichtung 2}$$

$$dV/dt = \text{Volumenänderung der Schmelzezufuhrvorrichtung 1 und/oder der Schmelzepumpe 6}$$

$$dV_z/dt = \text{Volumenzufuhr je Zeiteinheit zur schmelzeverarbeitenden Vorrichtung 3}$$

$$\text{max extr.} = \text{maximal erzielbare Volumenänderung/Volumenänderungsrate der Schmelzezufuhrvorrichtung 1 und/oder der Schmelzepumpe 6}$$

Das zum Rückspülen oder für eine Befüllung im Bereich der Filtervorrichtung 2 entnommene Gesamtvolumen der Schmelze ergibt sich durch das Integral unter der entsprechenden Kurve des Volumenänderungswerts in der Filtervorrichtung 2. Entsprechend ergibt sich das zusätzlich von der Schmelzezufuhrvorrichtung 1 und/oder der Schmelzepumpe 6 zur Verfügung gestellte Schmelzevolumen als das Integral zwischen der entsprechenden Kurve der Volumenänderung der Schmelzezufuhrvorrichtung 1 und/oder der Schmelzepumpe 6 und der Gerade, welche die Volumenzufuhr je Zeiteinheit zur schmelzeverarbeitenden Vorrichtung 3 charakterisiert (waagrechter Verlauf in Figur 2).

Wie beschrieben, ist in der Darstellung der Figur 2 der Fall dargestellt, in welchem möglichst schnell unter Ausnutzung der maximal möglichen Nachregelungsmöglichkeit der Schmelzezufuhr ein möglichst rasches Befüllen des Speichers im Sinne des erfindungsgemäßen Verfahrens unter Entnahme der benötigten Volumenmenge aus dem Volumenstrom erfolgt.

Im Falle, dass die Entnahme etwas langsamer erfolgen sollte, könnte beispielsweise der Verlauf der Kurve der Volumenänderung in der Filtervorrichtung 2 als Sägezahn ausgeführt sein, welcher innerhalb des dann als Hüllkurve anzusehenden eingezeichneten Kurvenverlaufs der Volumenänderung in der Filtervorrichtung 2 in Figur 2 verlaufen würde.

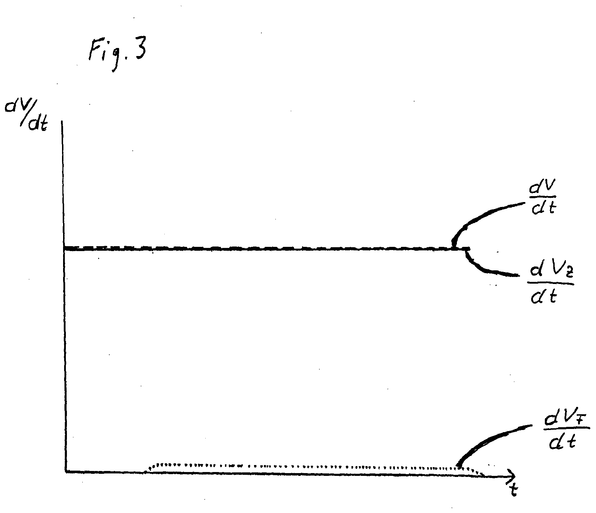

Figur 3 zeigt den Verlauf von erzielbaren Volumenänderungsraten bei einem Verfahren zur Steuerung einer schmelzeverarbeitenden Anlage gemäß dem Stand der Technik.

Im Unterschied zur Darstellung der Figur 2 ist dort zu sehen, dass die Volumenänderungsrate, d.h. die dem Schmelzeproduktionsstrom entnommene Schmelzedurchsatzmenge über die Zeit relativ lang im Bereich der Filtervorrichtung erfolgen muss, um sicherzustellen, dass der maximale Volumenabweichungswert der Volumenzufuhr je Zeiteinheit (des Durchsatzes) zur schmelzeverarbeitenden Vorrichtung 3 nicht über- bzw. unterschritten wird. Die Fläche unterhalb der Kurve der Volumenänderung pro Zeit im Bereich der Filtervorrichtung 2 entspricht dabei dem entnommenen Gesamtvolumen, welches dann zu einer Rückspülung oder zur Neubefüllung im Bereich der Filtervorrichtung 2 zur Verfügung steht. Diese Fläche entspricht dabei im Wesentlichen der Fläche unter der entsprechenden Kurve der Darstellung der Figur 2, wobei im direkten Vergleich ersichtlich ist, dass erfindungsgemäß durch den Betrieb der Anlage gemäß dem Verfahren gemäß Figur 2 das Befüllen mit dem entsprechenden Volumen erfindungsgemäß wesentlich schneller erfolgen kann, was erfindungsgemäß Standzeiten von Schmelze im Bereich der Filtervorrichtung 2 verringert und den Rückspülvorgang somit besonders einfach und zuverlässig machen kann, da somit die gegebenenfalls auftretenden Störungen durch Vercracken oder Verfestigen von Schmelzematerial während des Aufziehens des Volumens im Bereich der Filtervorrichtung 2 weitgehend vermieden werden können.

Wie in Figur 3 zu sehen, ist gemäß dem Stand der Technik keine Nachregelung der Volumenzufuhr je Zeiteinheit aus der schmelzeerzeugenden Vorrichtung 1 und/oder der Schmelzepumpe 6 vorgesehen. Die schmelzeerzeugende Vorrichtung 1 bzw. die Schmelzepumpe 6 arbeiten mit im Wesentlichen konstanten Volumenänderungsraten, d.h. mit konstantem Durchsatz.

Beispiel:

Im Fall eines Doppelschneckenextruders als Schmelzezufuhrvorrichtung 1 und einer Zahnradpumpe als Schmelzepumpe 6 sowie einer Rückspülfiltervorrichtung 2 sowie einer Schlitzdüsenanordnung als schmelzeverarbeitende Vorrichtung 3 könnten sich folgende Zahlenwerte beispielhaft ergeben.

Geht man von einem maximalen Dickenabweichungswert aus, welcher für die Schwankung der Foliendicke zulässig ist, bevorzugt von 1 % der Foliendicke, so wird bei einem Schmelzedruck im Bereich von 50 bis 120 bar zum Rückspülen ungefähr ein bis vier kg Schmelze benötigt.

Die Schmelzezufuhrvorrichtung 1 bzw. die Schmelzepumpe 6 können im Regelbetrieb zum Beispiel 500 kg pro Stunde an Massedurchsatz zur Verfügung stellen, maximal kann die Massezufuhr je Zeiteinheit auf etwa 550 kg pro Stunde erhöht werden.

Um die benötigten ein bis vier kg Schmelze zu entnehmen, ist gemäß der vorbestimmten maximal erzielbare Volumenänderungsrate der Volumenzufuhr je Zeiteinheit der Schmelzezufuhrvorrichtung und/oder der Schmelzepumpe eine maximal erzielbare Volumenänderungsrate von 0 bis 9 % der Gesamtförderleistung über einen Zeitraum von 70 Sekunden möglich. Dies gilt somit erfindungsgemäß sowohl für die entsprechende Beschleunigung (aufsteigender Teil der Kurven in Figur 2) wie auch für die Verzögerung (absteigender Teil der Kurven in Figur 2) der Volumenänderung in der Filtervorrichtung mit einer entsprechenden Änderungsrate. Mit einem entsprechenden Maximalwert der Volumenzufuhr je Zeiteinheit der Schmelzezufuhrvorrichtung und/oder der Schmelzepumpe (waagerechter Abschnitt der Kurven in Figur 2) kommt man somit gesamt auf ein Bereitstellen des genannten Volumens innerhalb von ca. 11 Minuten.

Im Vergleich dazu ist es bei einem herkömmlichen Verfahren, wie es beispielsweise gemäß Figur 3 wiedergegeben wird, nur möglich, das entsprechende Volumen innerhalb einer Zeitdauer von etwa einer Stunde zur Verfügung zu stellen, da es nicht zu einem Ausgleich des entnommenen Volumenstroms durch entsprechendes Nachregeln der zugeführten Volumenmenge dort kommt.

**Patentansprüche**

1. Verfahren zur Steuerung einer schmelzeverarbeitenden Anlage, wobei die Anlage eine Schmelzezufuhrvorrichtung (1), eine Filtervorrichtung (2) und eine schmelzeverarbeitende Vorrichtung (3) aufweist, oder zusätzlich dazu eine Schmelzepumpe (6) aufweist,

   **dadurch gekennzeichnet, dass**
   eine maximal erzielbare Volumenänderungsrate der Volumenzufuhr je Zeiteinheit der Schmelzezufuhrvorrichtung (1) und/oder der Schmelzepumpe (6) bestimmt wird, ein maximaler Volumenabweichungswert der Volumenzufuhr je Zeiteinheit zur schmelzeverarbeitenden Vorrichtung (3) festgelegt wird, und eine Volumenänderung zwischen Schmelzezufuhrvorrichtung (1) und/oder Schmelzepumpe (6) und schmelzeverarbeitender Vorrichtung (3) in der Filtervorrichtung (2) so eingestellt wird, dass eine sich aus dieser Volumenänderung pro Zeiteinheit ergebende Volumenänderungsrate der Filtervorrichtung (2) kleiner oder gleich oder so geringfügig größer als die maximal erzielbare Volumenänderungsrate der Schmelzezufuhrvorrichtung (1) und/oder der Schmelzepumpe (6) ist, so dass der maximale Volumenabweichungswert nicht überschritten wird.

2. Verfahren nach Anspruch 1, **dadurch gekennzeichnet, dass** ein Wert eines Produktionsparameters mittels einer Messvorrichtung (4) ermittelt wird, wobei der Wert des Produktionsparameters einer Einrichtung (5) zum Einstellen der Volumenzufuhr aus der Schmelzezufuhrvorrichtung (1) und/oder der Schmelzepumpe (6) und/oder zum Einstellen der Volumenänderung in der Filtervorrichtung (2) zugeführt wird, so dass der maximale Volumenabweichungswert nicht überschritten wird.

3. Verfahren nach Anspruch 2, **dadurch gekennzeichnet, dass** die Messvorrichtung (4) eine Dickenmessvorrichtung ist, mittels welcher eine Dicke d einer in der schmelzeverarbeitenden Vorrichtung (1) produzierten Folienbahn ermittelt wird.

4. Verfahren nach Anspruch 2 oder 3, **dadurch gekennzeichnet, dass** die Einrichtung (5) zum Einstellen der Volumenzufuhr aus der Schmelzezufuhrvorrichtung (1) und/oder der Schmelzepumpe (6) und/oder zum Einstellen der Volumenänderung in der Filtervorrichtung (2) eine Regelungseinrichtung ist, welche als Grundlage der Regelung zumindest den Wert des Produktionsparameters verwendet, so dass der maximale Volumenabweichungswert nicht überschritten wird.

5. Verfahren nach Anspruch 2 oder 3, **dadurch gekennzeichnet, dass** die Einrichtung (5) zum Einstellen der Volumenzufuhr aus der Schmelzezufuhrvorrichtung (1) und/oder der Schmelzepumpe (6) und/oder zum Einstellen der Volumenänderung in der Filtervorrichtung (2) eine Steuerungseinrichtung ist.

6. Verfahren nach einem der vorangehenden Ansprüche, **dadurch gekennzeichnet, dass** der Wert der Volumenänderung zwischen Schmelzezufuhrvorrichtung (1) und/oder Schmelzepumpe (6) und schmelzeverarbeitender Vorrichtung (3) in der Filtervorrichtung (2) kontinuierlich eingestellt wird.

7. Verfahren nach einem der vorangehenden Ansprüche, **dadurch gekennzeichnet, dass** der Wert der Volumenänderung zwischen Schmelzezufuhrvorrichtung (1) und/oder Schmelzepumpe (6) und schmelzeverarbeitender Vorrichtung (3) in der Filtervorrichtung (2) schrittweise eingestellt wird..

8. Verfahren nach einem der vorangehenden Ansprüche, **dadurch gekennzeichnet, dass** ein Maximalwert der Volumenzufuhr je Zeiteinheit der Schmelzezufuhrvorrichtung (1) und/oder der Schmelzepumpe (6) bestimmt wird und die maximal erzielbare Volumenänderungsrate der Schmelzezufuhrvorrichtung (1) und/oder der Schmelzepumpe (6) nur so lange vorliegt, bis der Maximalwert der Volumenzufuhr erreicht wird.

9. Verfahren nach einem der vorangehenden Ansprüche, **dadurch gekennzeichnet, dass** der maximale Volumenabweichungswert in einem Bereich von 0,0 bis 1,0 % der Volumenzufuhr je Zeiteinheit zur schmelzeverarbeitenden Vorrichtung (3) liegt.


**Claims**

1. Method for open-loop control of a melt processing apparatus, said apparatus having a melt supply device (1), a filter device (2) and a melt processing device (3), or additionally a melt pump (6),
   **characterised in that**
   a maximum attainable volume change rate of the volume supply per unit of time of the melt supply device (1) and/or melt pump (6) is defined, a maximum volume deviation value of the volume supply per unit of time to the melt processing device (3) is defined, and a volume change between the melt supply device (1) and/or melt pump (6) and the melt processing device (3) is set in the filter device (2) such that a volume change rate of the filter device (2) resulting from this volume change per unit of time is smaller than or equal to or slightly larger than the maximum attainable volume change rate of the melt supply device (1) and/or melt pump (6), such that the maximum volume deviation value is not exceeded.

2. Method according to claim 1, **characterised in that** a value of a production parameter is determined using a measuring device (4), wherein the value of the production parameter is supplied to a unit (5) for setting the volume supply from the melt supply device (1) and/or melt pump (6) and/or for setting the volume change in the filter device (2) such that the maximum volume deviation value is not exceeded.

3. Method according to claim 2, **characterised in that** the measuring device (4) is a thickness measuring device by means of which a thickness d of a foil web produced in the melt processing device (1) is determined.

4. Method according to claim 2 or 3, **characterised in that** the unit (5) for setting the volume supply from the melt supply device (1) and/or melt pump (6) and/or for setting the volume change in the filter device (2) is a closed-loop control unit which takes at least the value of the production parameter as the basis for closed-loop control such that the maximum volume deviation value is not exceeded.

5. Method according to claim 2 or 3, **characterised in that** the unit (5) for setting the volume supply from the melt supply device (1) and/or melt pump (6) and/or for setting the volume change in the filter device (2) is an open-loop control unit.

6. Method according to one of the previous claims, **characterised in that** the value of the volume change between the melt supply device (1) and/or melt pump (6) and the melt processing device (3) is continuously set in the filter device (2).

7. Method according to one of the previous claims, **characterised in that** the value of the volume change between the melt supply device (1) and/or melt pump (6) and the melt processing device (3) is set step-by-step in the filter device (2).

8. Method according to one of the previous claims, **characterised in that** a maximum value of the volume supply per unit of time of the melt supply device (1) and/or melt pump (6) is determined and the maximum attainable volume change rate of the melt supply device (1) and/or melt pump (6) only prevails until the maximum value of the volume supply is attained.

9. Method according to one of the previous claims, **characterised in that** the maximum volume deviation value lies in a range from 0.0 to 1.0% of the volume supply per unit of time to the melt processing device (3).

**Revendications**

1. Procédé de commande d'une installation de transformation de matière fondue, ladite installation comprenant un dispositif d'alimentation de la matière fondue (1), un dispositif filtrant (2) et un dispositif de transformation de matière fondue (3) ou une pompe à matière fondue (6) supplémentaire,
**caractérisé en ce**
qu'un taux maximal possible de variation du volume d'alimentation par unité de temps du dispositif d'alimentation de matière fondue (1) et/ou de la pompe à matière fondue (6) est déterminé, qu'une valeur maximale d'écart du volume d'alimentation par unité de temps est fixée pour le dispositif de transformation de matière fondue (3) et qu'une variation du volume entre le dispositif d'alimentation de matière fondue (1) et/ou la pompe à matière fondue (6) et le dispositif de transformation de matière fondue (3) est réglée dans le dispositif filtrant (2) de telle sorte que le taux de variation du volume du dispositif filtrant (2) résultant de ladite variation du volume par unité de temps est inférieur ou égal, ou alors très légèrement supérieur au taux maximal possible de variation du volume du dispositif d'alimentation de matière fondue (1) et/ou de la pompe à matière fondue (6) afin de ne pas dépasser la valeur maximale d'écart du volume.

2. Procédé conforme à la revendication 1 **caractérisé en ce qu'**une valeur d'un paramètre de production est calculée au moyen d'un dispositif de mesure (4), ladite valeur du paramètre de production étant affectée à un dispositif (5) de réglage du volume d'alimentation du dispositif d'alimentation de matière fondue (1) et/ou de la pompe à matière fondue (6) et/ou de réglage de la variation du volume dans le dispositif filtrant (2) de manière à ne pas dépasser la valeur maximale d'écart du volume.

3. Procédé conforme à la revendication 2 **caractérisé par le fait que** le dispositif de mesure (4) est un dispositif contrôleur d'épaisseur qui permet de calculer l'épaisseur d d'une bande de film produite par le dispositif de transformation de matière fondue (1).

4. Procédé conforme à la revendication 2 ou 3 **caractérisé par le fait que** le dispositif (5) de réglage du volume d'alimentation du dispositif d'alimentation de matière fondue (1) et/ou de la pompe à matière fondue (6) et/ou de réglage de la variation du volume dans le dispositif filtrant (2) est un dispositif de contrôle qui base son réglage sur au moins la valeur du paramètre de production de manière à ne pas dépasser la valeur maximale d'écart du volume.

5. Procédé conforme à la revendication 2 ou 3 **caractérisé par le fait que** le dispositif (5) de réglage du volume d'alimentation du dispositif d'alimentation de matière fondue (1) et/ou de la pompe à matière fondue (6) et/ou de réglage de la variation du volume dans le dispositif filtrant (2) est un dispositif de commande.

6. Procédé conforme à l'une des revendications précédentes **caractérisé par le fait que** la valeur de la variation du volume entre le dispositif d'alimentation de matière fondue (1) et/ou la pompe à matière fondue (6) et le dispositif de transformation de matière fondue (3) est ajustée en continu dans le dispositif filtrant (2).

7. Procédé conforme à l'une des revendications précédentes **caractérisé en ce que** la valeur de la variation du volume entre le dispositif d'alimentation de matière fondue (1) et/ou la pompe à matière fondue (6) et le dispositif de transformation de matière fondue (3) est ajustée progressivement dans le dispositif filtrant (2).

8. Procédé conforme à l'une des revendications précédentes **caractérisé par le fait qu'**une valeur maximale du volume d'alimentation par unité de temps du dispositif d'alimentation de matière fondue (1) et/ou de la pompe à matière fondue (6) est déterminée et en ce que le taux maximal possible de variation du dispositif d'alimentation de matière fondue (1) et/ou de la pompe à matière fondue (6) reste uniquement valable jusqu'à ce que la valeur maximale de l'alimentation soit atteinte.

9. Procédé conforme à l'une des revendications précédentes **caractérisé en ce que** la valeur maximale d'écart du volume se situe entre 0,0 et 1,0 % de l'alimentation par unité de temps au dispositif de transformation de matière fondue (3).

Fig. 1

Fig. 2

EP 2 978 582 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1778379 B1
- DE 102006019445 A1
- DE 102006040703 A1
- DE 10301536 A1
- US 5122315 A